# EUROPEAN PATENT SPECIFICATION

(11) **EP 2 224 673 B1**
(45) Date of publication and mention of the grant of the patent: **20.06.2012**
(21) Application number: 10163803.9
(22) Date of filing: 23.07.1998
(51) Int. Cl.: H04L 29/06

(54) **System and method for globally and securely accessing unified information in a computer network**
System und Verfahren für den globalen und sicheren Zugriff auf vereinheitlichte Information in einem Computernetzwerk
Système et procédé pour accéder globalement et de manière sécurisée aux informations unifiées dans un réseau informatique

(30) Priority: 30.07.1997 US 903118
(43) Date of publication of application: 01.09.2010
(62) Divisional of application: 98936975.6
(73) Proprietor: Visto Corporation, Redwood Shores, CA 94065 (US)
(72) Inventor: Mendez, Daniel, Redshores, CA 94065 (US); Riggins, Mark, Redshores, CA 94065 (US); Wagle, Prasad, Redshores, CA 94065 (US); Bui, Hong Q., Redshores, CA 94065 (US); Ng, Mason, Redshores, CA 94065 (US); Quinlan, Sean Michael, Redshores, CA 94065 (US); Ying, Christine C., Redshores, CA 94065 (US); Zuleeg, Christopher R., Redshores, CA 94065 (US); Cowan, David J., Redshores, CA 94065 (US); Aptekar-Strober, Joanna A., Redshores, CA 94065 (US)
(74) Representative: McCann, Heather Alison

(56) References cited:
- WO-A2-96/17306
- US-A- 5 572 643

## Description

### BACKGROUND OF THE INVENTION

### 1. Field of the Invention

This invention relates generally to computer networks, and more particularly provides a system and method for globally and securely accessing unified information in a computer network.

### 2. Description of the Background Art

The internet currently interconnects about 100,000 computer networks and several million computers. Each of these computers stores numerous application programs for providing numerous services, such as generating, sending and receiving e-mail, accessing World Wide Web sites, generating and receiving facsimile documents, storing and retrieving data, etc.

A roaming user, i.e., a user who travels and accesses a workstation remotely, is faced with several problems. Program designers have developed communication techniques for enabling the roaming user to establish a communications link and to download needed information and needed service application programs from the remote workstation to a local computer. Using these techniques, the roaming user can manipulate the data on the remote workstation and when finished, can upload the manipulated data back from the remote workstation to the local computer. However, slow computers and slow communication channels make downloading large files and programs a time-consuming process. Further, downloading files and programs across insecure channels severely threatens the integrity and confidentiality of the downloaded data.

Data consistency is also a significant concern for the roaming user. For example, when maintaining multiple independently modifiable copies of a document, a user risks using an outdated version. By the time the user notices an inconsistency, interparty miscommunication or data loss may have already resulted.
The user must then spend more time attempting to reconcile the inconsistent versions and addressing any miscommunications.

The problem of data inconsistency is exacerbated when multiple copies of a document are maintained at different network locations. For example, due to network security systems such as conventional firewall technology, a user may have access only to a particular one of these network locations. Without access to the other sites, the user cannot confirm that the version on the accessible site is the most recent draft.

Data consistency problems may also arise when using application programs from different vendors. For example, the Netscape Navigator^{™} web engine and the Internet Explorer^{™} web engine each store bookmarks for quick reference to interesting web sites. However, since each web engine uses different formats and stores bookmarks in different files, the bookmarks are not interchangeable. In addition, one web engine may store a needed bookmark, and the other may not. A user who, for example, runs the Internet Explorer^{™} web engine at home and runs the Netscape Navigator^{™} web engine at work risks having inconsistent bookmarks at each location.

WO96/17306 describes a system in which services, such as on-demand movie services, are provided to a client device, such as a set-top box, via a media server. The set top box sends generates a request for a service, the request including a logical address of the server providing the requested service, and sends the request via the media server; subsequent communication between the server and the set top box are routed via the media server. This allows the client to access multiple services via a single server, namely the media server, meaning that backend services can be allocated to the service servers, allowing the client device to focus its resources on presentation.

US5572643 describes a system for accessing data from a web browser, and addresses the problems associated with the delay incurred when downloading certain types of data from certain web sites. In particular, it teaches displaying informational notices to the user during this so-called "downtime".

Therefore, a system and method are needed to enable multiple users to access computer services remotely without consuming excessive user time, without severely threatening the integrity and confidentiality of the data, and without compromising data consistency.

### SUMMARY OF THE INVENTION

The present invention provides a system and methods for providing global and secure access to services in a computer network.

These systems and methods are set out in the appended claims. A user can gain access to a global server using any terminal, which is connected via a computer network such as the Internet to the global server and which is enabled with a web engine. A client stores a first set of workspace data, and is coupled via a computer network to a global server.

Service engines for managing services such as e-mail management, accessing bookmarks, calendaring, network access, etc. may be stored anywhere in the computer network. The global server is configured to provide the user with access to services, which based on level of authentication management or user preferences may include only a subset of available services. Upon receiving a service request from the client, the global server sends configuration information to enable access to the service.

A method of the present invention includes establishing a communications link between the client and the global server. The method includes establishing a communications link between the client and a service based upon user requests. The method receives configuration data and uses the configuration data to configure the client components such as the operating system, the web engine and other components. Configuring client components enables the client to communicate with the service and provides a user-and-service-specific user interface on the client. Establishing a communications link may also include confirming access privileges.

The system and methods of the present invention advantageously provide a secure globally accessible third party, i.e. the global server. The system and methods provide a secure technique for enabling a user to access the global server and thus workspace data remotely and securely. Because of the global firewall and the identification and security services performed by the global server, corporations can store relatively secret information on the global server for use by authorized clients. Yet, the present invention also enables corporations to maintain only a portion of their secret information on the global server, so that there would be only limited loss should the global server be compromised. Further, the global server may advantageously act as a client proxy for controlling access to services, logging use of keys and logging access of resources.

Because the system and method operate over the Internet, the system is accessible using any connected terminal having a web engine such as an internet-enabled smart phone, television settop (e.g., web TV), etc. and is accessible over any distance.

Further, a roaming user may be enabled to access workspace data from the global server or may be enabled to access a service for accessing workspace data from a client. For example, a user may prefer not to store personal information on the global server but may prefer to have remote access to the information. Further, the user may prefer to store highly confidential workspace elements on the client at work as added security should the global server be compromised.

The present invention may further benefit the roaming user who needs emergency access to information. The roaming user may request a Management Information Systems (MIS) director controlling the client to provide the global server with the proper keys to enable access to the information on the client. If only temporary access is desired, the keys can then be later destroyed either automatically or upon request.

### BRIEF DESCRIPTION OF THE DRAWINGS

FIG. 1 is a block diagram illustrating a secure data-synchronizing remotely accessible network in accordance with the present invention;
FIG. 2 is a block diagram illustrating details of a FIG. 1 remote terminal;
FIG. 3 is a block diagram illustrating details of a FIG. 1 global server;
FIG. 4 is a block diagram illustrating details of a FIG. 1 synchronization agent;
FIG. 5 is a graphical representation of an example bookmark in global format;
FIG. 6 is a graphical representation of the FIG. 3 configuration data;
FIG. 7 is a block diagram illustrating the details of a FIG. 1 client;
FIG. 8 is a block diagram illustrating the details of a FIG. 1 base system;
FIG.9 illustrates an example services list;
FIG. 10 is a flowchart illustrating a method for remotely accessing a secure server;
FIG. 11 is a flowchart illustrating details of the FIG. 10 step of creating a link between a client and global server;
FIG. 12 is a flowchart illustrating details of the FIG. 10 step of providing access to a service in a first embodiment;
FIG. 13 is a flowchart illustrating details of the FIG. 10 step of providing access to a service in a second embodiment;
FIG. 14 is a flowchart illustrating details of the FIG. 10 step of providing access to a service in a third embodiment; and
FIG. 15 is a flowchart illustrating a method for synchronizing multiple copies of a workspace element over a secure network.

### DETAILED DESCRIPTION OF THE PREFERRED EMBODIMENT

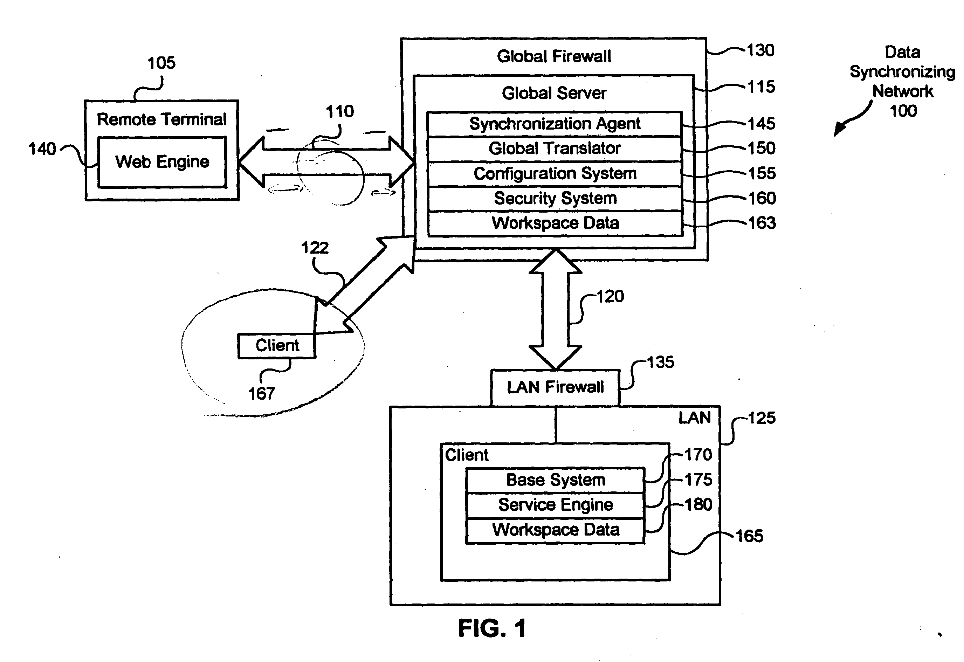

FIG. 1 is a block diagram illustrating a network 100, comprising a first site such as a remote computer terminal 105 coupled via a communications channel 110 to a global server 115. The global server 115 is in turn coupled via a communications channel 120 to a second site such as a Local Area Network (LAN) 125 and via a communications channel 122 to a third site such as client 167. Communications channel 110, communications channel 120 and communications channel 122 may be referred to as components of a computer network such as the Internet. The global server 115 is protected by a global firewall 130, and the LAN 125 is protected by a LAN firewall 135.

The LAN 125 comprises a client 165, which includes a base system 170 for synchronizing workspace data 180 (e-mail data, file data, calendar data, user data, etc.) with the global server 115 and may include a service engine 175 for providing computer services such as scheduling, e-mail, paging, word-processing or the like.

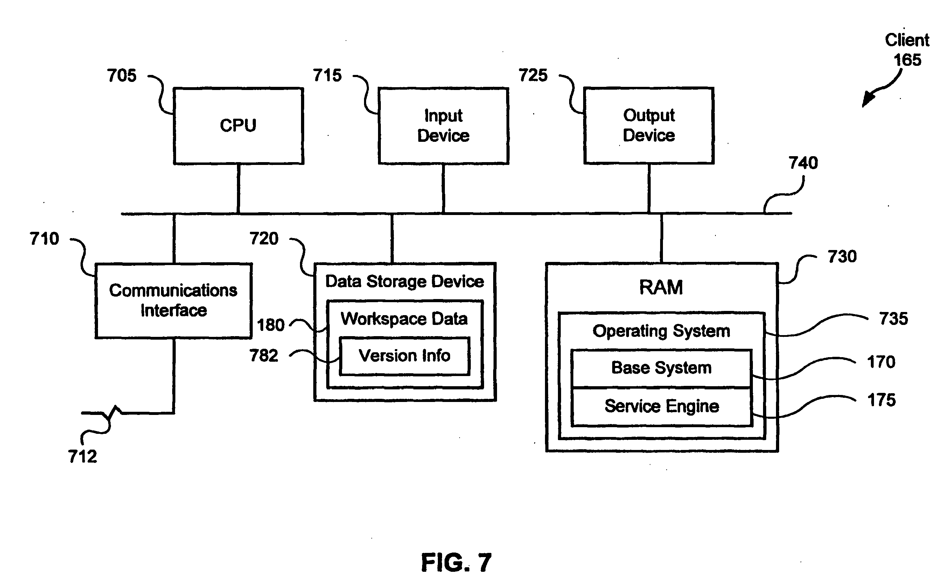

Those skilled in the art will recognize that workspace data 180 may include other types of data such as application programs. It will be further appreciated that workspace data 180 may each be divided into workspace elements, wherein each workspace element may be identified by particular version information 782 (FIG. 7). For example, each e-mail, file, calendar, etc. may be referred to as "a workspace element in workspace data." For simplicity, each workspace element on the client 165 is referred to herein as being stored in format A. It will be further appreciated that the workspace data 180 or portions thereof may be stored at different locations such as locally on the client 165, on other systems in the LAN 125 or on other systems (not shown) connected to the global server 115.

The client 167 is similar to the client 165. However, workspace data stored on the client 167 is referred to as being stored in format B, which may be the same as or different than format A. All aspects described above and below with reference to the client 165 are also possible with respect to the client 167. For example, client 167 may include services (not shown) accessible from remote terminal 105, may include a base system (not shown) for synchronizing workspace elements with the global server 115, etc.

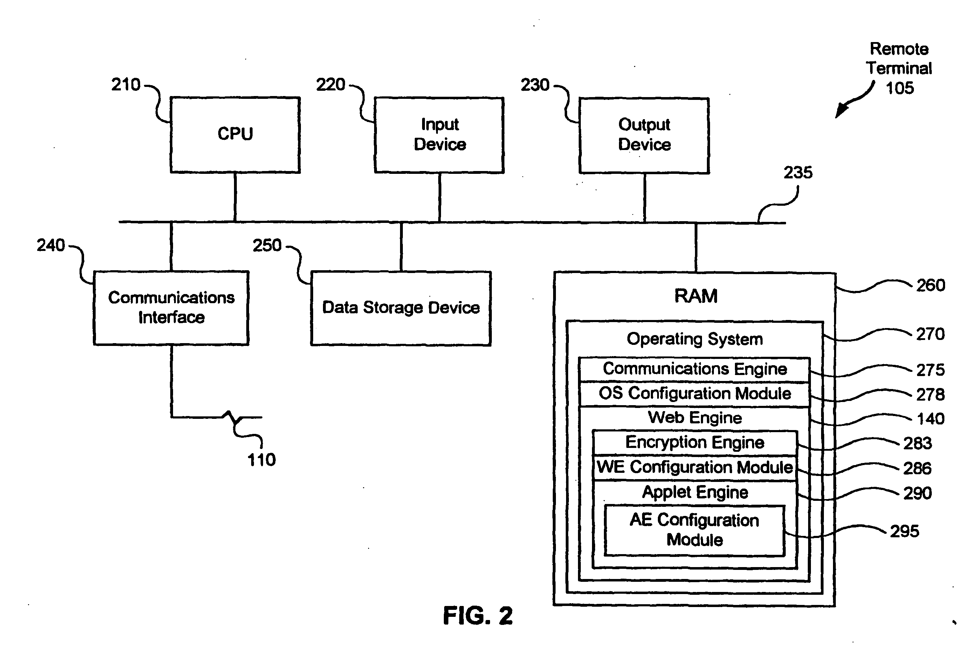

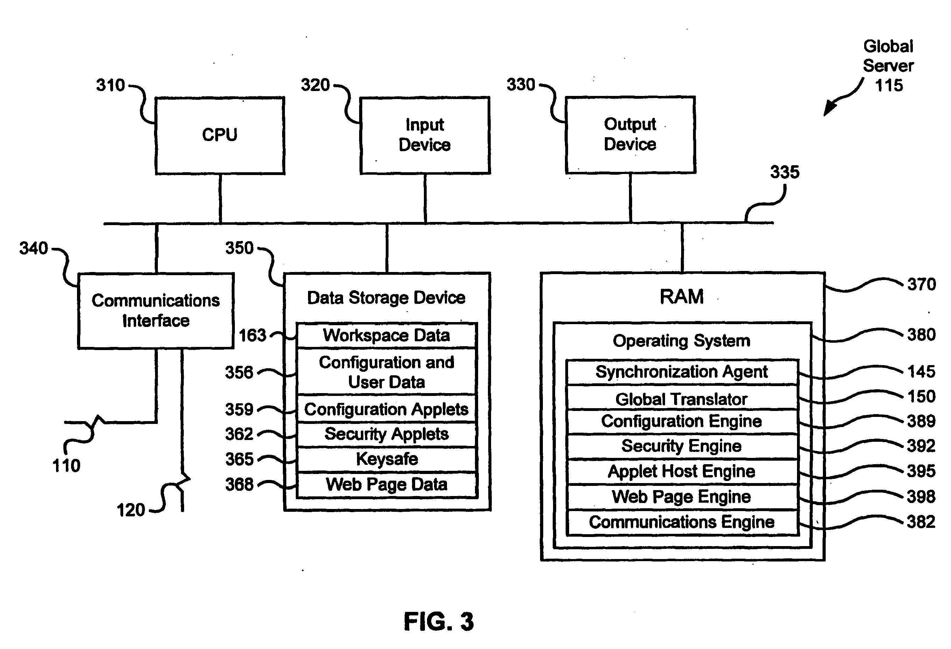

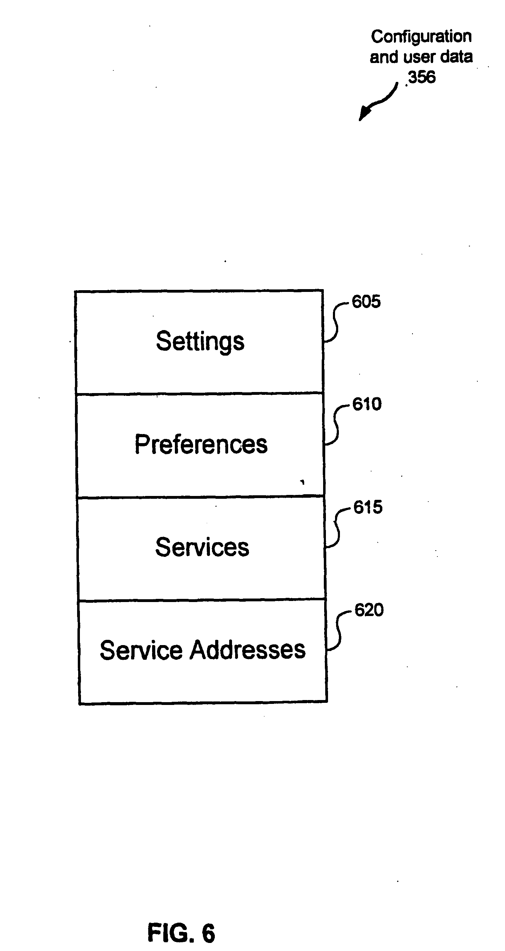

The global server 115 includes a security system 160 for providing only an authorized user with secure access through firewalls to services. The security system 160 may perform identification and authentication services and may accordingly enable multiple levels of access based on the level of identification and authentication. The global server 115 further includes a configuration system 155 that downloads configuration data 356 (FIGs. 3 and 6) to the remote terminal 105 to configure remote terminal 105 components such as the operating system 270 (FIG. 2), the web engine 283 (FIG. 2), the applet engine 290 (FIG. 2), etc. The configuration system 155 uses the configuration data 356 to enable the remote terminal 105 to access the services provided by the service engine 175 and to provide a user-and-service-specific user interface.

The global server 115 stores workspace data 163, which includes an independently modifiable copy of each selected workspace element in the selected portions of the workspace data 180. Accordingly, the workspace data 163 includes an independently modifiable copy of each corresponding version information 782 (FIG. 7). The workspace data 163 may also include workspace elements which originate on the global server 115 such as e-mails sent directly to the global server 115 or workspace elements which are downloaded from another client (not shown).

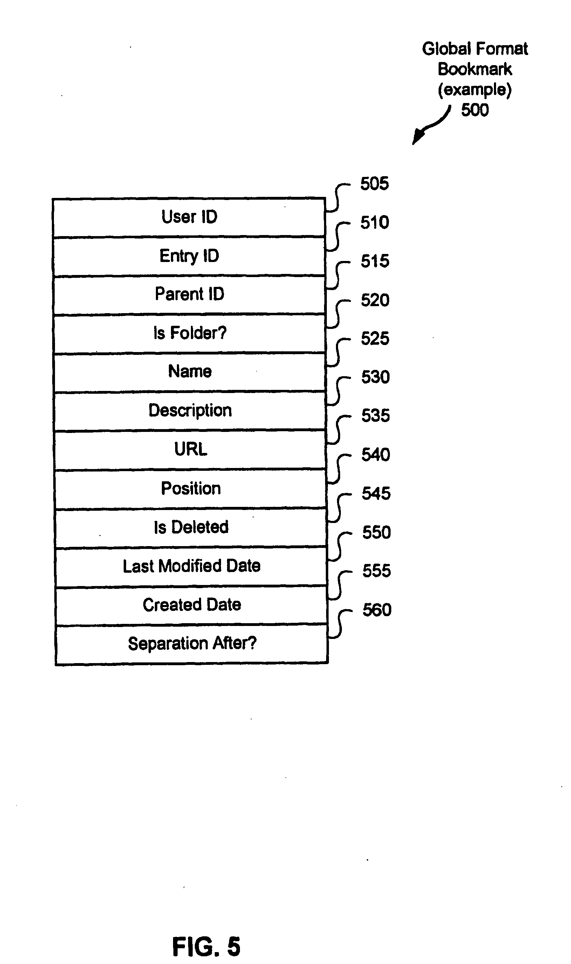

The global server 115 maintains the workspace data 163 in a format, referred to as a "global format," which is selected to be easily translatable by the global translator 150 to and from format A and to and from format B. As with format A and format B, one skilled in the art knows that the global format actually includes a global format for each information type. For example, there may be a global format for bookmarks (FIG. 5), a global format for files, a global format for calendar data, a global format for e-mails, etc.

The global server 115 also includes a synchronization agent 145 for examining the workspace elements of workspace data 163. More particularly, the base system 170 and the synchronization agent 145, collectively referred to herein as "synchronization means," cooperate to synchronize the workspace data 163 with the selected portions of the workspace data 180. The synchronization means may individually synchronize workspace elements (e.g., specific word processor documents) or may synchronize workspace element folders (e.g., a bookmark folder). Generally, the base system 170 manages the selected portions of the workspace data 180 within the LAN 125 and the synchronization agent 145 manages the selected portions of workspace data 163 within the global server 115.

It will be appreciated that the global translator 150 cooperates with the synchronization means to translate between format A (or format B) and the global format. It will be further appreciated that the global server 115 may synchronize the workspace data 163 with workspace data 180 and with the workspace data (not shown) on the client 167. Accordingly, the workspace data 163 can be easily synchronized with the workspace data (not shown) on the client 167.

The remote terminal 105 includes a web engine 140, which sends requests to the global server 115 and receives information to display from the global server 115. The web engine 140 may use HyperText Transfer Protocol (HTTP) and HyperText Markup Language (HTML) to interface with the global server 115. The web engine 140 may be enabled to run applets, which when executed operate as the security interface for providing access to the global server 115 and which operate as the application interface with the requested service. Using the present invention, a user can operate any remote client 105 connected to the Internet to access the global server 115, and thus to access the services and the workspace data on or accessible by the global server 115.

FIG. 2 is a block diagram illustrating details of the remote terminal 105, which includes a Central Processing Unit (CPU) 210 such as a Motorola Power PC" microprocessor or an Intel Pentium^{™} microprocessor. An input device 220 such as a keyboard and mouse, and an output device 230 such as a Cathode Ray Tube (CRT) display are coupled via a signal bus 235 to CPU 210. A communications interface 240, a data storage device 250 such as Read Only Memory (ROM) and a magnetic disk, and a Random-Access Memory (RAM) 260 are further coupled via signal bus 235 to CPU 210. The communications interface 240 is coupled to a communications channel 110 as shown in FIG. 1.

An operating system 270 includes a program for controlling processing by CPU 210, and is typically stored in data storage device 250 and loaded into RAM 260 (as shown) for execution. Operating system 270 further includes a communications engine 275 for generating and transferring message packets via the communications interface 240 to and from the communications channel 110. Operating system 270 further includes an Operating System (OS) configuration module 278, which configures the operating system 270 based on OS configuration data 356 (FIG. 3) such as Transmission Control Protocol (TCP) data, Domain Name Server (DNS) addresses, etc. received from the global server 115.

Operating system 270 further includes the web engine 140 for communicating with the global server 115. The web engine 140 may include a web engine (WE) configuration module 286 for configuring elements of the web engine 140 such as home page addresses, bookmarks, caching data, user preferences, etc. based on the configuration data 356 received from the global server 115. The web engine 140 may also include an encryption engine 283 for using encryption techniques to communicate with the global server 115. The web engine 140 further may include an applet engine 290 for handling the execution of downloaded applets including applets for providing security. The applet engine 290 may include an Apple Engine (AE) configuration module 295 for configuring the elements of the applet engine 290 based on configuration data 356 received from the global server 115.

FIG. 3 is a block diagram illustrating details of the global server 115, which includes a Central Processing Unit (CPU) 310 such as a Motorola Power PC^{™} microprocessor or an Intel Pentium^{™} microprocessor. An input device 320 such as a keyboard and mouse, and an output device 330 such as a Cathode Ray Tube (CRT) display are coupled via a signal bus 335 to CPU 310. A communications interface 340, a data storage device 350 such as Read Only Memory (ROM) and a magnetic disk, and a Random-Access Memory (RAM) 370 are further coupled via signal bus 335 to CPU 310. As shown in FIG. 1, the communications interface 340 is coupled to the communications channel 110 and to the communications channel 120.

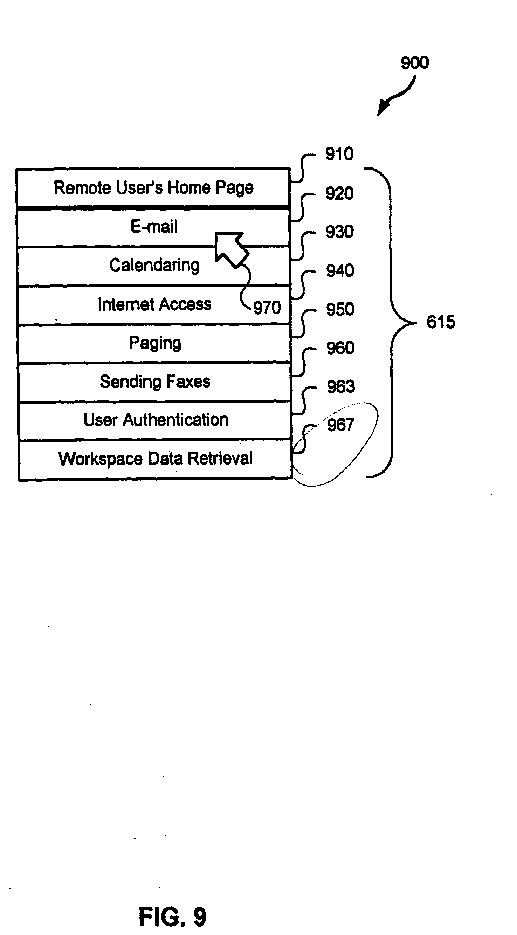

An operating system 380 includes a program for controlling processing by CPU 310, and is typically stored in data storage device 350 and loaded into RAM 370 (as illustrated) for execution. The operating system 380 further includes a communications engine 382 for generating and transferring message packets via the communications interface 340 to and from the communications channel 345. The operating system 380 also includes a web page engine 398 for transmitting web page data 368 to the remote terminal 105, so that the remote terminal 105 can display a web page 900 (FIG. 9) listing functionality offered by the global server 115. Other web page data 368 may include information for displaying security method selections.

The operating system 380 may include an applet host engine 395 for transmitting applets to the remote terminal 105. A configuration engine 389 operates in conjunction with the applet host engine 395 for transmitting configuration applets 359 and configuration and user data 356 to the remote terminal 105. The remote terminal 105 executes the configuration applets 359 and uses the configuration and user data 356 to configure the elements (e.g., the operating system 270, the web engine 140 and the applet engine 290) of the remote terminal 105. Configuration and user data 356 is described in greater detail with reference to FIG. 6.

The operating system 380 also includes the synchronization agent 145 described with reference to FIG. 1. The synchronization agent 145 synchronizes the workspace data 163 on the global server 115 with the workspace data 180 on the client 165. As stated above with reference to FIG. 1, the global translator 150 translates between format A used by the client 165 and the global format used by the global server 115.

The operating system 380 may also includes a security engine 392 for determining whether to instruct a communications engine 382 to create a secure communications link with a client 165 or terminal 105, and for determining the access rights of the user. For example, the security engine 392 forwards to the client 165 or remote terminal 105 security applets 362, which when executed by the receiver poll the user and respond back to the global server 115. The global server 115 can examine the response to identify and authenticate the user.

For example, when a client 165 attempts to access the global server 115, the security engine 384 determines whether the global server 115 accepts in-bound communications from a particular port. If so, the security engine 392 allows the communications engine 382 to open a communications channel 345 to the client 165. Otherwise, no channel will be opened. After a channel is opened, the security engine 392 forwards an authentication security applet 362 to the remote terminal 105 to poll the user for identification and authentication information such as for a user ID and a password. The authentication security applet 362 will generate and forward a response back to the global server 115, which will use the information to verify the identity of the user and provide access accordingly.

It will be appreciated that a "request-servicing engine" may be the configuration engine 389 and the applet host engine 395 when providing services to a remote terminal 105 or client 165. The request-servicing engine may be the web page engine 398 when performing workspace data 163 retrieval operations directly from the global server 115. The request-servicing engine may be the configuration engine 389 and the applet host engine 395 when performing workspace data 180 retrieval operations from the client 165 or from any other site connected to the global server 115. The request-servicing engine may be security engine 392 when performing security services such as user identification and authentication. The request-servicing engine may be the synchronization agent when the performing synchronization with the client 165. Further, the request-servicing engine may be any combination of these components.

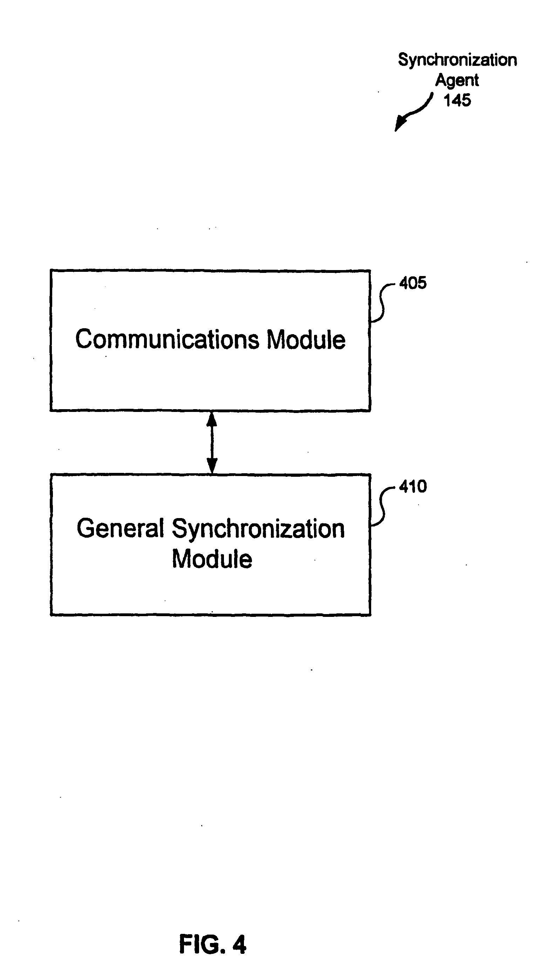

FIG. 4 is a block diagram illustrating details of the synchronization agent 145, which includes a communications module 405 and a general synchronization module 410. The communications module 405 includes routines for compressing data and routines for communicating via the communications channel 120 with the base system 170. The communications module 405 may further include routines for communicating securely channel through the global firewall 130 and through the LAN firewall 125.

The general synchronization module 410 includes routines for determining whether workspace elements have been synchronized and routines for forwarding to the base system 170 version information (not shown) of elements determined to be modified after last synchronization. The general synchronization module 410 may either maintain its own last synchronization signature (not shown), receive a copy of the last synchronization signature with the request to synchronize from the base system 170, or any other means for insuring that the workspace data has been synchronized. The general synchronization module 410 further includes routines for receiving preferred versions of workspace data 180 workspace elements from the base system 170, and routines for forwarding preferred versions of workspace data 180 workspace elements to the base system 170.

FIG. 5 illustrates an example bookmark workspace element in the global format. The translator 150 incorporates all the information needed to translate between all incorporated formats. For example, if for a first client a bookmark in format A needs elements X, Y and Z and for a second client a bookmark in format B needs elements W, X and Y, the global translator 150 incorporates elements W, X, Y and Z to generate a bookmark in the global format. Further, the translator 150 incorporates the information which is needed by the synchronization means (as described below in FIG. 4) such as the last modified date. Accordingly, a bookmark in the Global Format may include a user identification (ID) 505, an entry ID 510, a parent ID 515, a folder ID flag 520, a name 525, a description 530, the Uniform Resource Locator (URL) 535, the position 540, a deleted ID flag 545, a last modified date 550, a created date 555 and a separation ID flag 560.

FIG. 6 is a block diagram illustrating details of the configuration and user data 356. Configuration data 356 includes settings 605 such as TCP data and the DNS address, web browser settings such as home page address, bookmarks and caching data, applet engine settings, and applet configuration date such as the user's e-mail address, name and signature clock. It will be appreciated that applet-specific configuration and user data 356 is needed, since the service may not be located on the user's own local client 165. Configuration and user data 356 further includes predetermined user preferences 610 such as font, window size, text size, etc.

Configuration data 356 further includes the set of services 615, which will be provided to the user. Services 615 include a list of registered users and each user's list of user-preferred available services 615. Services may also include a list of authentication levels needed to access the services 615. Configuration and user data 137 further includes service addresses 620 specifying the location of each of the services 615 accessible via the global server 115.

FIG. 7 is a block diagram illustrating details of the client 165, which includes a CPU 705, an input device 710, an output device 725, a communications interface 710, a data storage device 720 and RAM 730, each coupled to a signal bus 740.

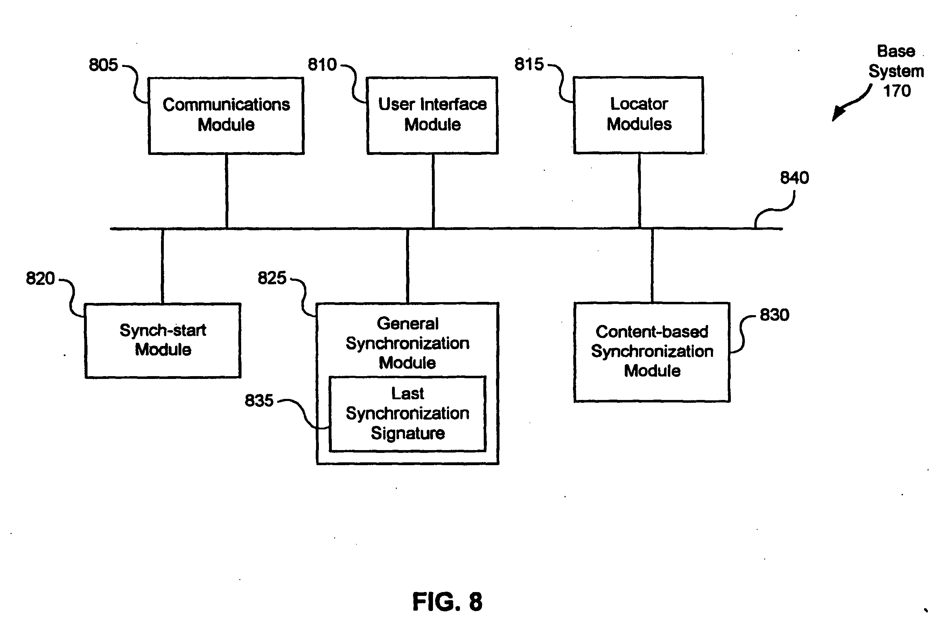

An operating system 735 includes a program for controlling processing by the CPU 705, and is typically stored in the data storage device 720 and loaded into the RAM 730 (as illustrated) for execution. A service engine 175 includes a service program for managing workspace data 180 that includes version information (not shown). The service engine 175 may be also stored in the data storage device 720 and loaded into the RAM 730 (as illustrated) for execution. The workspace data 180 may be stored in the data storage device 330. As stated above with reference to FIG. 1, the base system 170 operates to synchronize the workspace data 180 on the client 165 with the workspace data 163 on the global server 115. The base system 170 may be also stored in the data storage device 720 and loaded into the RAM 730 (as shown) for execution. The base system 170 is described in greater detail with reference to FIG. 8.

FIG. 8 is a block diagram illustrating details of the base system 170, which includes a communications module 805, a user interface module 810, locator modules 815, a synchronization-start ("synch-start") module 820, a general synchronization module 825 and a content-based synchronization module 830. For simplicity, each module is illustrated as communicating with one another via a signal bus 840. It will be appreciated that the base system 170 includes the same components as included in the synchronization agent 145.

The communications module 805 includes routines for compressing data, and routines for communicating via the communications interface 710 (FIG. 7) with the synchronization agent 145 (FIG. 1). The communications module 805 may include routines for applying Secure Socket Layer (SSL) technology and user identification and authentication techniques (i.e., digital certificates) to establish a secure communication channel through the LAN firewall 135 and through the global firewall 130. Because synchronization is initiated from within the LAN firewall 135 and uses commonly enabled protocols such as HyperText Transfer Protocol (HTTP), the typical firewall 135 which prevents in-bound communications in general and some outbound protocols does not act as an impediment to e-mail synchronization. Examples of communications modules 805 may include TCP/IP stacks or the AppleTalk^{™} protocol.

The user interface 810 includes routines for communicating with a user, and may include a conventional Graphical User Interface (GUI). The user interface 810 operates in coordination with the client 165 components as described herein.

The locator modules 815 include routines for identifying the memory locations of the workspace elements in the workspace data 180 and the memory locations of the workspace elements in the workspace data 163. Workspace element memory location identification may be implemented using intelligent software, i.e., preset memory addresses or the system's registry, or using dialogue boxes to query a user. It will be appreciated that the locator modules 815 may perform workspace element memory location identification upon system boot-up or after each communication with the global server 115 to maintain updated memory locations of workspace elements.

The synchronization-start module 820 includes routines for determining when to initiate synchronization of workspace data 163 and workspace data 180. For example, the synchronization-start module 820 may initiate data synchronization upon user request, at a particular time of day, after a predetermined time period passes, after a predetermined number of changes, after a user action such as user log-off or upon like criteria. The synchronization-start module 820 initiates data synchronization by instructing the general synchronization module 825 to begin execution of its routines. It will be appreciated that communications with synchronization agent 145 preferably initiate from within the LAN 125, because the typical LAN firewall 125 prevents in-bound communications and allows out-bound communications.

The general synchronization module 825 includes routines for requesting version information from the synchronization agent 145 (FIG. 1) and routines for comparing the version information against a last synchronization signature 835 such as a last synchronization date and time to determine which versions have been modified. The general synchronization module 825 further includes routines for comparing the local and remote versions to determine if only one or both versions of a particular workspace element have been modified and routines for performing an appropriate synchronizing responsive action. Appropriate synchronizing responsive actions may include forwarding the modified version (as the preferred version) of a workspace element in workspace data 180 or forwarding just a compilation of the changes to the other store(s). Other appropriate synchronizing responsive actions may include, if reconciliation between two modified versions is needed, then instructing the content-based synchronization module 830 to execute its routines (described below).

It will be appreciated that the synchronization agent 145 preferably examines the local version information 124 and forwards only the elements that have been modified since the last synchronization signature 835. This technique makes efficient use of processor power and avoids transferring unnecessary data across the communications channel 712. The general synchronization module 825 in the LAN 135 accordingly compares the data elements to determine if reconciliation is needed. Upon completion of the data synchronization, the general synchronization module 825 updates the last synchronization signature 835.

The content-based synchronization module 830 includes routines for reconciling two or more modified versions of workspace data 163,180 in the same workspace element. For example, if the original and the copy of a user workspace element have both been modified independently since the last synchronization, the content-based synchronization module 830 determines the appropriate responsive action. The content-based synchronization module 830 may request a user to select the preferred one of the modified versions or may respond based on preset preferences, i.e., by storing both versions in both stores or by integrating the changes into a single preferred version which replaces each modified version at both stores. When both versions are stored at both stores, each version may include a link to the other version so that the user may be advised to select the preferred version.

It will be appreciated that any client 165 that wants synchronization may have a base system 170. Alternatively, one base system 170 can manage multiple clients 165. It will be further appreciated that for a thin client 165 of limited computing power such as a smart telephone, all synchronization may be performed by the global server 115. Accordingly, components of the base system 170 such as the user interface module 810, the locator modules 815, the general synchronization module 825 and the content-based synchronization module 830 may be located on the global server 115. To initiate synchronization from the client 165, the client 165 includes the communications module 805 and the synch-start module 820.

FIG. 9 illustrates an example list 900 of accessible services provided by a URL-addressable HyperText Markup Language (HTML)-based web page, as maintained by the web page engine 398 of the global server 115. The list 900 includes a title 910 "Remote User's Home Page," a listing of the provided services 615 and a pointer 970 for selecting one of the provided services 615. As illustrated, the provided services may include an e-mail service 920, a calendaring service 930, an internet access service 940, a paging service 950, a fax sending service 960, a user authentication service 963 and a workspace data retrieval service 967.

Although not shown, other services 615 such as bookmarking, QuickCard^{™}, etc. may be included in the list 900. Although the web page provides the services 615 in a list 900, other data structures such as a pie chart or table may alternatively be used.

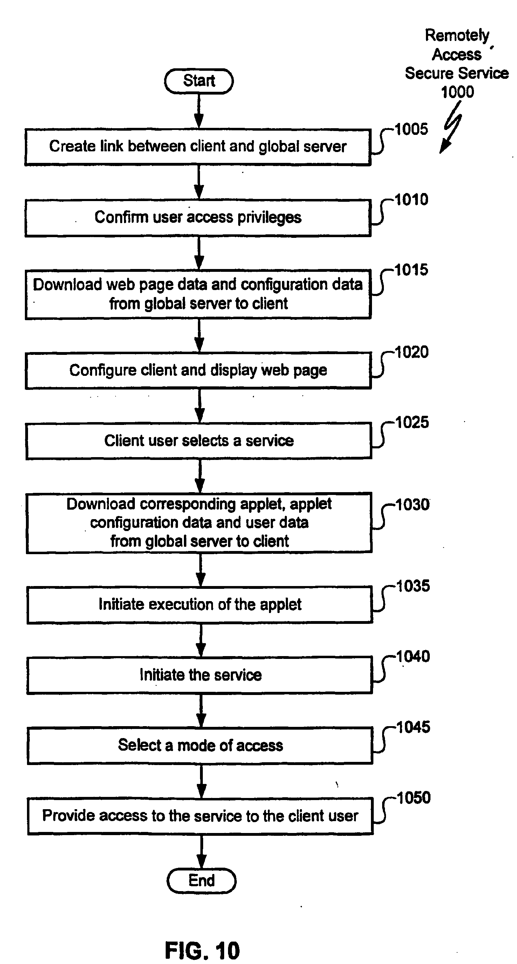

FIG. 10 is a flowchart illustrating a method 1000 for enabling a user to access the services 615 in the computer network system 100. Method 1000 begins by the remote terminal 105 in step 1005 creating a communications link with the global server 115. The global server 115 in step 1010 confirms that the user has privileges to access the functionality of the global server 115. Confirming user access privileges may include examining a user certificate, obtaining a secret password, using digital signature technology, performing a challenge/response technique, etc. It will be appreciated that the security engine 392 may cause the applet host engine 395 to forward via the communications channel 345 to the remote terminal 105 an authentication security applet 362 which when executed communicates with the global server 115 to authenticate the user.

After user access privileges are confirmed, the web page engine 398 of the global server 115 in step 1015 transmits web page data 368 and configuration and user data 356 to the remote terminal 105. The web engine 140 of the remote terminal 105 in step 1020 uses the web page data 368 and the configuration and user data 356 to display a web page service list 900 (FIG. 9) on the output device 230, and to enable access to the services 615 which the global server 115 offers.
An example service list 900 is shown and ascribed with reference to FIG. 9.

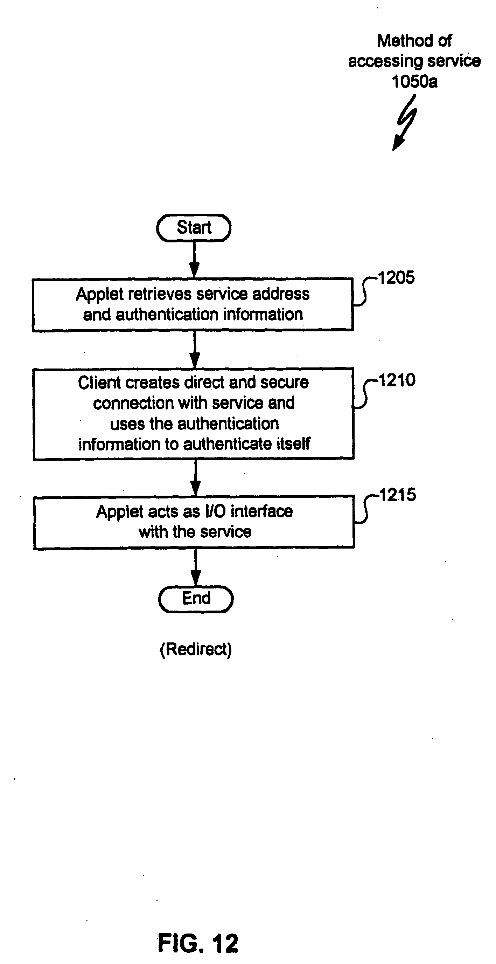

From the options listed on the web page 900, the user in step 1025 selects a service 615 via input device 220. In response, the request-servicing engine (described with reference to FIG. 3) provides the selected service 615. For example, the applet host engine 395 of the global server 115 in step 1030 may download to the remote terminal 105 a corresponding applet 359 and configuration and user data 356 for executing the requested service 615. Alternatively, the web page engine 398 may use, for example, HTTP and HTML to provide the selected service 615. As described above with reference to FIG. 6, the configuration and user data 356 may include user-specific preferences such as user-preferred fonts for configuring the selected service 615. Configuration and user data 356 may also include user-specific and service-specific information such as stored bookmarks, calendar data, pager numbers, etc. Alternatively, the corresponding applet 359 and the configuration and user data 356 could have been downloaded in step 1015.
Providing access to the service by an applet 359 is described in greater detail below with reference to FIGs. 12-14.

The applet engine 290 of the remote terminal 105 in step 1035 initiates execution of the corresponding downloaded applet. The global server 115 in step 1040 initiates the selected service 615 and in step 1045 selects one of three modes described with reference to FIGs. 12-14 for accessing the service 615. For example, if the user selects a service 615 on a service server (e.g., the client 165) that is not protected by a separate firewall, then the global server 115 may provide the user with direct access. If the user selects a service 615 provided by a service server within the LAN 125, then the global server 115 may access the service 615 as a proxy for the user. It will be appreciated that each firewall 130 and 135 may store policies establishing the proper mode of access the global server 115 should select. Other factors for selecting mode of access may include user preference, availability and feasibility. The global server 115 in step 1050 uses the selected mode to provide the remote terminal 105 user with access to the selected service 615.

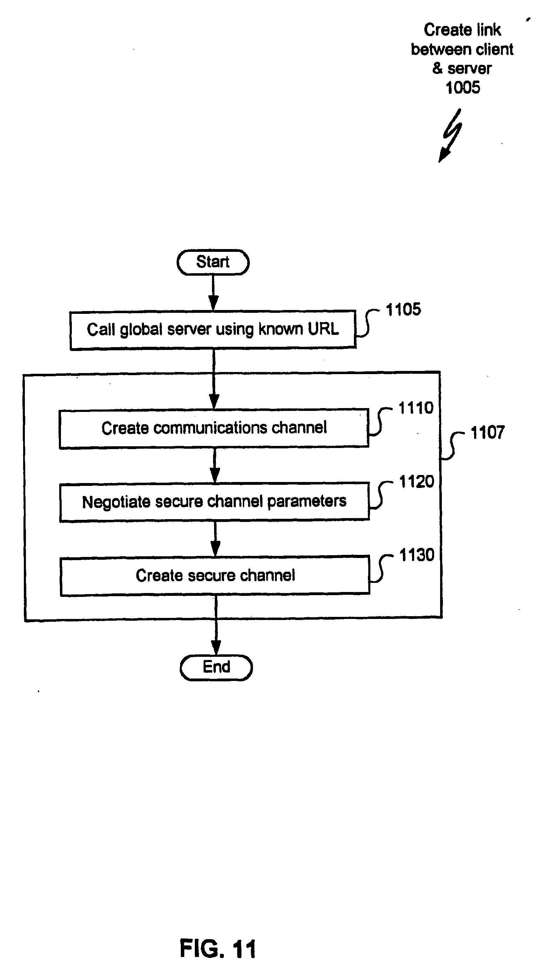

FIG. 11 is a flowchart illustrating details of step 1005, which begins by the remote terminal 105 in step 1105 using a known Uniform Resource Locator (URL) to call the global server 115. The global server 115 and the remote terminal 105 in step 1107 create a secure communications channel therebetween, possibly by applying Secure Sockets Layer (SSL) technology. That is, the security engine 392 of the global server 115 in step 1110 determines if in-bound secure communications are permitted and, if so, creates a communications channel with the remote terminal 105. The web engine 140 of the remote terminal 105 and the security engine 392 of the global server 115 in step 1115 negotiate secure communications channel parameters, possibly using public key certificates. An example secure communications channel is RSA with RC4 encryption. Step 1115 thus may include selecting an encryption protocol which is known by both the global server 115 and the remote terminal 105. The encryption engine 283 of the remote terminal 105 and secure communications engine 392 of the global server 115 in step 1120 use the secure channel parameters to create the secure communications channel. Method 505 then ends.

FIG. 12 is a flowchart illustrating details of step 1050 in a first embodiment, referred to as step 1 050a, wherein the global server 115 provides the remote terminal 105 with a direct connection to a service 615. Step 1050a begins by the applet engine 290 in step 1205 running a configuration applet 359 for the selected service 615 that retrieves the service address 620 from data storage device 380 and the authentication information from the keysafe 365. The communications interface 240 in step 1210 creates a direct and secure connection with the communications interface 340 of the global server 115 at the retrieved service address 620, and uses the authentication information to authenticate itself. The applet in step 1215 acts as the I/O interface with the service 615. Step 1050a then ends.

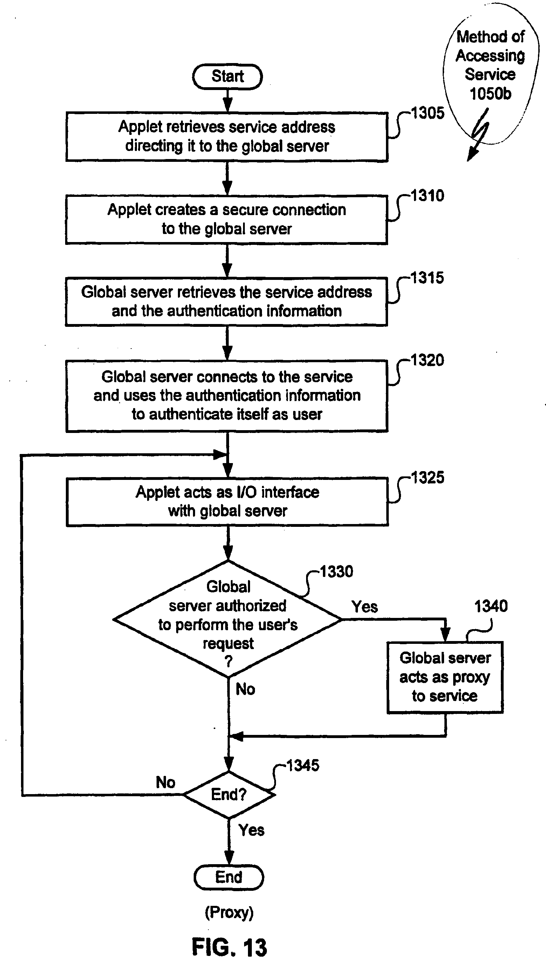

FIG. 13 is a flowchart illustrating details of step 1050 in a second embodiment, referred to as step 1050b, wherein the global server 115 acts for the remote terminal 105 as a proxy to the service 615. Step 1050b begins with a configuration applet 359 in step 1305 requesting the service address 620 for the selected service 615, which results in retrieving the service address 620 directing the applet 359 to the global server 115. The applet 359 in step 1310 creates a connection with communications interface 340 of the global server 115. The global server 115 in step 1315 retrieves the service address 620 of the selected service 615 and the authentication information IOI tie selected service 615 from the keysafe 365. The communications interface 340 of the global server 115 in step 1320 negotiates secure channel parameters for creating a secure channel with the service server. The communications interface 340 in step 1320 also authenticates itself as the user.

Thereafter, the applet 359 in step 1325 acts as the I/O interface with the communications interface 340 of the global server 115. If the global server 115 in step 1330 determines that it is unauthorized to perform a remote terminal 105 user's request, then the global server 115 in step 1345 determines whether the method 1050b ends, e.g., whether the user has quit. If so, then method 1050b ends. Otherwise, method 1050b returns to step 1325 to obtain another request. If the global server 115 in step 1330 determines that it is authorized to perform the remote terminal 105 user's request, then the global server 115 in step 1340 acts as the proxy for the remote terminal 105 to the service 615. As proxy, the global server 115 forwards the service request to the selected service 615 and forwards responses to the requesting applet 359 currently executing on the remote terminal 105. Method 1050b then jumps to step 1345.

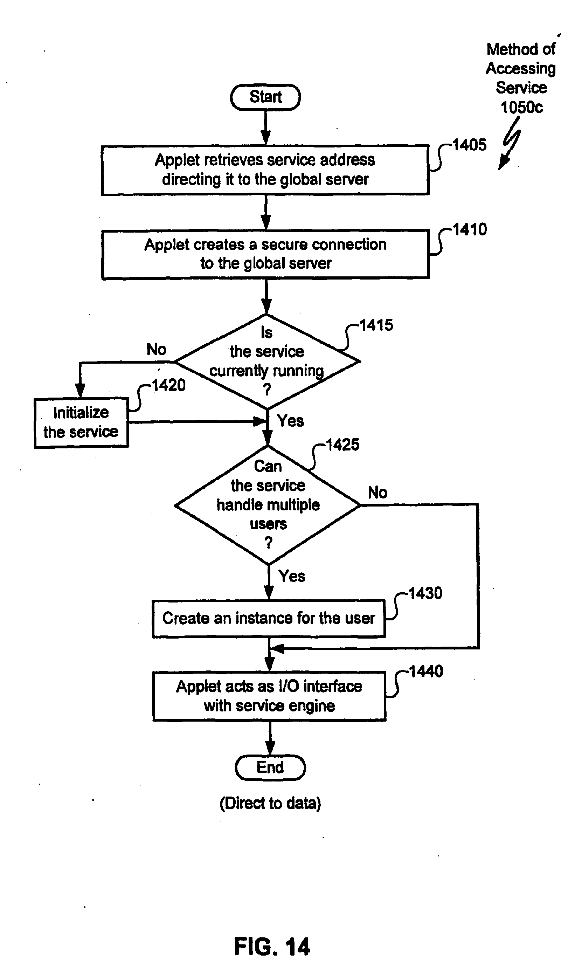

FIG. 14 is a flowchart illustrating details of step 1050 in a third embodiment, referred to as step 1050c, wherein the service 615 being requested is located on the global server 115. Step 1050 begins with an applet in step 1405 retrieving the service address 620 for the selected service 615, which results in providing the configuration applet 359 with the service address 620 of the service 615 on the global server 115. Thus, the applet in step 1410 creates a secure connection with the global server 115. No additional step of identification and authentication is needed since the remote terminal 105 has already identified and authenticated itself to the global server 115 as described with reference to step 1010 of FIG. 10.

In step 1415, a determination is made whether the service 615 is currently running. If so, then in step 1425 a determination is made whether the service 615 can handle multiple users. If so, then the global server 115 in step 1430 creates an instance for the user, and the applet in step 1440 acts as the I/O interface with the service 615 on the global server 115. Method 1050c then ends. Otherwise, if the service 615 in step 1425 determines that it cannot handle multiple users, then method 1050c proceeds to step 1440. Further, if in step 1415 the global server 115 determines that the service 615 is not currently running, then the global server 115 in step 1420 initializes the service 615 and proceeds to step 1425.

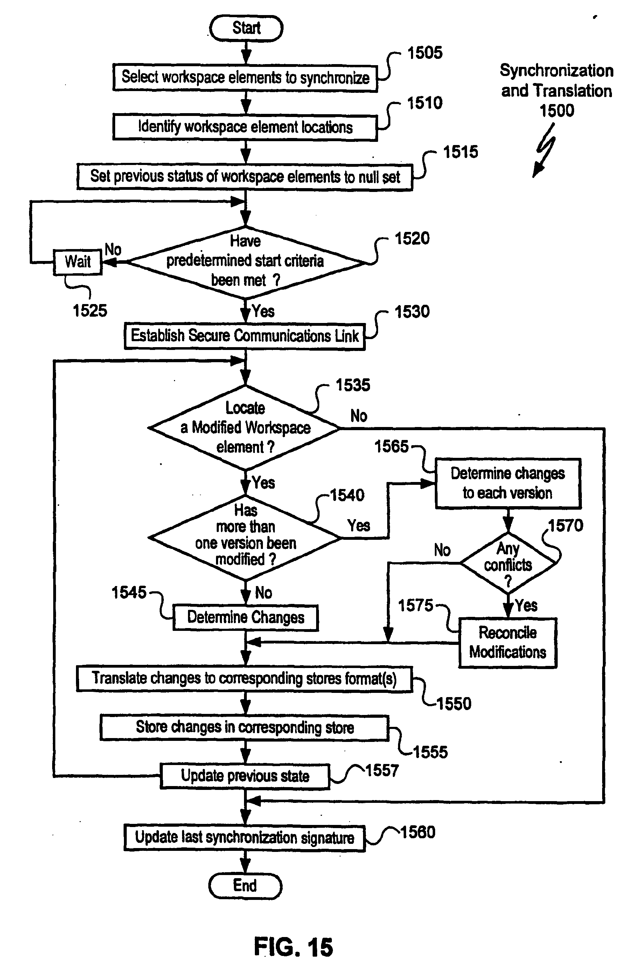

FIG. 15 is a flowchart illustrating a method 1500 for using a global translator 150 to synchronize workspace data 163 and workspace data 180 in a secure network 100. Method 1500 begins with the user interface 900 in step 1505 enabling a user to select workspace elements of workspace data 163 and workspace data 180 for the synchronization means to synchronize. The locator modules 815 in step 1510 identify the memory locations of the workspace elements in workspace data 163 and workspace data 180. If a selected workspace element does not have a corresponding memory location, such as in the case of adding new workspace elements to the global server 115, then one is selected. The selected memory location may be a preexisting workspace element or a new workspace element. As stated above, workspace element memory location identification may be implemented using intelligent software or dialogue boxes. The general synchronization module 825 in step 1515 sets the previous status of the workspace elements equal to the null set, which indicates that all information of the workspace element has been added.

The synchronization-start module 820 in step 1520 determines whether predetermined criteria have been met which indicate that synchronization of the workspace elements selected in step 1505 should start. If not, then the synchronization-start module 820 in step 1525 waits and loops back to step 1520.
Otherwise, the communications module 805 and the communications module 405 in step 1530 establish a secure communications channel therebetween.

The general synchronization module 825 in step 1535 determines whether any workspace elements have been modified. That is, the general synchronization module 825 in step 1535 examines the version information of each selected workspace element in the workspace data 180 against the last synchronization signature 435 to locate modified workspace elements. This comparison may include comparing the date of last modification with the date of last synchronization, or may include a comparison between the current status and the previous status as of the last interaction. Similarly, the general synchronization module 815 examines the version information of each corresponding workspace element in workspace data 163 and the last synchronization signature 435 to locate modified workspace elements.

If in step 1535 no modified workspace elements or folders are located, then the general synchronization module 825 in step 1560 updates the last synchronization signature 435 and method 1500 ends. Otherwise, the general synchronization module 825 in step 1540 determines whether more than one version of a workspace element has been modified since the last synchronization.

If only one version has been modified, then the corresponding general synchronization module 825 in step 1545 determines the changes made. As stated above, determining the changes made may be implemented by comparing the current status of the workspace element against the previous status of the workspace element as of the last interaction therebetween. If the changes were made only to the version in the workspace data 163, then the global translator 150 in step 1550 translates the changes to the format used by the other store, and the general synchronization module 410 in step 1555 forwards the translated changes to the general synchronization module 825 for updating the outdated workspace element in the workspace data 180. If the updated version is a workspace element in the workspace data 180, then the general synchronization module 825 sends the changes to the updated version to the global translator 150 for translation and then to the general synchronization module 410 for updating the outdated workspace element in the workspace data 163. The general synchronization module 825 and the general synchronization module 410 in step 1557 update the previous state of the workspace element to reflect the current state as of this interaction. Method 1500 then returns to step 1535.

If the general synchronization module 825 in step 1540 determines that multiple versions have been modified, then the general synchronization module 825 in step 1565 computes the changes to each version and in step 1570 instructs the content-based synchronization module 830 to examine content to determine if any conflicts exist. For example, the content-based synchronization module 830 may determine that a conflict exists if a user deletes a paragraph in one version and modified the same paragraph in another version. The content-based synchronization module 830 may determine that a conflict does not exist if a user deletes different paragraphs in each version. If no conflict is found, then method 1500 jumps to step 1550 for translating and forwarding the changes in each version to the other store. However, if a conflict is found, then the content-based synchronization module 830 in step 1575 reconciles the modified versions. As stated above, reconciliation may include requesting instructions from the user or based on previously selected preferences performing responsive actions such as storing both versions at both stores. It will be appreciated that a link between two versions may be placed in each of the two versions, so that the user will recognize to examine both versions to select the preferred version. Method 1500 then proceeds to step 1550.

It will be further appreciated that in step 1510 new workspace elements and preexisting workspace elements to which new workspace elements will be merged are set to "modified" and the previous status is set to the null set. Thus, the general synchronization module 825 in step 1540 will determine that more that one version has been modified and the content-based synchronization module 830 in step 1570 will determine that no conflict exists. The changes in each will be translated and forwarded to the other store. Accordingly, the two versions will be effectively merged and stored at each store.

For example, if a first bookmark folder was created by the web engine 140 on the client 165, a second folder was created by a web engine 140 on the remote terminal 105, no preexisting folder existed on the global server 115 and the user selected each of these folders for synchronization, then the synchronization means will effectively merge the first and second folders. That is, the general synchronization module 825 on the client 165 will determine that the first folder has been modified and the previous status is equal to the null set. The general synchronization module 825 will determine and send the changes, i.e., all the workspace elements in the first folder, to a new global folder on the global server 115. Similarly, the general synchronization module (not shown) on the remote terminal 105 will determine that, as of its last interaction, the previous status of each of the second and the global folders is the null set. The general synchronization module 825 will instruct the content-based synchronization module 830 to examine the changes made to each folder to determine whether a conflict exists. Since no conflicts will exist, the general synchronization module 825 will forward the changes to the global folder and the general synchronization module 410 will forward its changes to the second store, thereby merging the workspace elements of the first and second folders in the global and second folders. The general synchronization module 410 will inform the general synchronization module 825 that the global folder has been modified relative to the last interaction, and will forward the new changes to the first folder. Thus, the thirst and second folders will be merged and stored at each store.

The foregoing description of the preferred embodiments of the invention is by way of example only, and other variations of the above-described embodiments and methods are provided by the present invention. For example, a server can be any computer which is polled by a client. Thus, the remote terminal 105 may be referred to as a type of client. Although the system and method have been described with reference to applets, other downloadable executables such as Java^{™} applets, Java^{™} applications or ActiveX^{™} control developed by the Microsoft Corporation can alternatively be used. Components of this invention may be implemented using a programmed general-purpose digital computer, using application specific integrated circuits, or using a network of interconnected conventional components and circuits.

## Claims

1. A user terminal (105) comprising:
a communications interface (240) arranged to communicate via an Internet communications channel (110);
a web engine (140) configured to contact a global server (115) via the Internet communications channel using the communications interface to retrieve configuration data (356), the web engine being arranged to present a plurality of services (615) using the retrieved configuration data, the plurality of services identifying at least once service access downloadable executable operative to access a service engine (175) from the user terminal via the Internet communications channel;
a display (230) to present the plurality of services to a user of the user terminal; and
an input device (220) to select a service from the plurality from the user,
wherein the web engine is configured to download a service access downloadable executable corresponding to the selected service via the Internet communications channel using the communications interface, and to execute the downloaded downloadable executable, whereby to retrieve a service address corresponding to the service engine for use by the user terminal in accessing a workspace data retrieval service (967) provided by said service engine, said workspace data retrieval service enabling retrieval of a workspace element in workspace data held on a terminal remote from the global server and corresponding to the retrieved service address.

2. The user terminal of claim 1, wherein said workspace element includes calendar workspace data.

3. The user terminal of claim 1, wherein the user terminal is configured using the service access downloadable executable to access the selected service provided by a further service engine via the Internet.

4. The user terminal of any one of the preceding claims, wherein the user terminal is arranged to download said service access downloadable executable from the global server.

5. The user terminal of any one of the preceding claims, wherein said service engine provides a user authentication service (963).

6. The user terminal of any one of the preceding claims, wherein the plurality of downloadable executables includes a subset of available downloadable executables, said subset being based on user identity.

7. The user terminal of any one of the preceding claims, wherein the user terminal is configured to receive responses from said service engine via the global server acting as a proxy for the user terminal.

8. The user terminal of any one of claim 1 to claim 6, wherein the user terminal is configured to access said service engine by retrieving a service address of the service engine from the global server.

9. The user terminal of any one of the preceding claims, wherein the user terminal is configured to access said service engine by sending service requests, and receiving responses to said service requests, via the Internet communications channel.

10. A method of providing access to services (615) provided by a service engine (175) to a user terminal (105) via a global server (115), said service engine being located on a terminal (165) remote from said global server, and said service engine providing a workspace data retrieval service (967) enabling retrieval of a workspace element in workspace data held on said terminal (165), the method comprising configuring the user terminal (105) to:
communicate (1005) with the global server via an Internet communications channel (110) to retrieve (1015) configuration data (356) to present a plurality of services, the plurality of services identifying at least one service access downloadable executable operative to access the service engine from a user terminal (105) via the Internet communications channel;
present (1020) the plurality of services on a display to a user;
receive (1025) a selection of a service from the plurality; and
download (1030) a service access downloadable executable corresponding to the selected service via the Internet to the user terminal; and
execute the downloaded downloadable executable, whereby to retrieve a service address corresponding to the service engine for use by the user terminal in accessing a workspace data retrieval service (967) provided by said service engine.

11. The method of claim 10, wherein said workspace element includes calendar workspace data.

12. The method of claim 10, comprising configuring (1035) the user terminal using the service access downloadable executable to access a service provided by a service engine located on a further terminal (167) via the Internet.

13. The method of any one of claim 10 to claim 12, comprising downloading the service access downloadable executable from the global server.

14. The method of any one of claim 10 to claim 13, wherein said service engine provides a user authentication service (963).

15. The method of any one of claim 10 to claim 14, wherein the plurality of downloadable executables includes a subset of available downloadable executables, said subset being based on user identity.

16. The method of any one of claim 10 to claim 15, wherein the user terminal receives responses from said service engine via the global server acting (1340) as a proxy for the user terminal.

17. The method of any one of claim 10 to claim 15, wherein the user terminal accesses said service engine by retrieving (1205) a service address of the service engine from the global server.

18. The method of any one of claim 10 to claim 18, wherein the user terminal accesses said service engine by sending service requests, and receives responses to said service requests, via the Internet communications channel.

## Patentansprüche

1. Benutzerendgerät (105), umfassend:
eine Kommunikationsschnittstelle (240), die dafür ausgelegt ist, über einen Internet-Kommunikationskanal (110) zu kommunizieren;
eine Web-Engine (140), die dafür ausgelegt ist, einen globalen Server (115) über den Internet-Kommunikationskanal unter Verwendung der Kommunikationsschnittstelle zu kontaktieren, um Konfigurationsdaten (356) abzurufen, wobei die Web-Engine dafür ausgelegt ist, unter Verwendung der abgerufenen Konfigurationsdaten eine Vielzahl von Diensten (615) zu präsentieren, wobei die Vielzahl von Diensten mindestens ein herunterladbares ausführbares Dienstzugriffsprogramm identifiziert, das wirkt, um von dem Benutzerendgerät aus über den Internet-Kommunikationskanal auf eine Dienst-Engine (175) zuzugreifen;
eine Anzeige (230), um die Vielzahl von Diensten einem Benutzer des Benutzerendgeräts zu präsentieren; und
eine Eingabeeinrichtung (220), um einen Dienst aus der Vielzahl von dem Benutzer auszuwählen,
wobei die Web-Engine dafür ausgelegt ist, über den Internet-Kommunikationskanal unter Verwendung der Kommunikationsschnittstelle ein herunterladbares ausführbares Dienstzugriffsprogramm herunterzuladen, das dem ausgewählten Dienst entspricht, und das heruntergeladene herunterladbare ausführbare Programm auszuführen, um **dadurch** eine Dienstadresse abzurufen, die der Dienst-Engine zur Verwendung durch das Benutzerendgerät beim Zugriff auf einen durch die Dienst-Engine bereitgestellten Arbeitsplatz-Datenabrufdienst (967) entspricht, wobei der Arbeitsplatz-Datenabrufdienst das Abrufen eines Arbeitsplatzelements in auf einem von dem globalen Server entfernten Endgerät gehaltenen Arbeitsplatzdaten ermöglicht und der abgerufenen Dienstadresse entspricht.

2. Benutzerendgerät nach Anspruch 1, wobei das Arbeitsplatzelement Kalender-Arbeitsplatzdaten umfasst.

3. Benutzerendgerät nach Anspruch 1, wobei das Benutzerendgerät unter Verwendung des herunterladbaren ausführbaren Dienstzugriffsprogramms dafür konfiguriert ist, über das Internet auf den durch eine weitere Dienst-Engine bereitgestellten ausgewählten Dienst zuzugreifen.

4. Benutzerendgerät nach einem der vorhergehenden Ansprüche, wobei das Benutzerendgerät dafür ausgelegt ist, das herunterladbare ausführbare Dienstzugriffsprogramm von dem globalen Server herunterzuladen.

5. Benutzerendgerät nach einem der vorhergehenden Ansprüche, wobei die Dienst-Engine einen Benutzerauthentifikationsdienst (963) bereitstellt.

6. Benutzerendgerät nach einem der vorhergehenden Ansprüche, wobei die Vielzahl herunterladbarer ausführbarer Programme eine Teilmenge von verfügbaren herunterladbaren ausführbaren Programmen umfasst, wobei die Teilmenge auf Benutzeridentität basiert.

7. Benutzerendgerät nach einem der vorhergehenden Ansprüche, wobei das Benutzerendgerät dafür ausgelegt ist, über den globalen Server, der als Proxy für das Benutzerendgerät wirkt, Antworten von der Dienst-Engine zu empfangen.

8. Benutzerendgerät nach einem der Ansprüche 1 bis Anspruch 6, wobei das Benutzerendgerät dafür ausgelegt ist, durch Abrufen einer Dienstadresse der Dienst-Engine von dem globalen Server auf die Dienst-Engine zuzugreifen.

9. Benutzerendgerät nach einem der vorhergehenden Ansprüche, wobei das Benutzerendgerät dafür ausgelegt ist, über den Internet-Kommunikationskanal durch Senden von Dienstanforderungen auf die Dienst-Engine zuzugreifen und Antworten auf die Dienstanforderungen zu empfangen.

10. Verfahren zum Bereitstellen von Zugriff auf Dienste (615), die durch eine Dienst-Engine (175) über einen globalen Server (115) einem Benutzerendgerät (105) bereitgestellt werden, wobei sich die Dienst-Engine auf einem von dem globalen Server entfernten Endgerät (165) befindet und die Dienst-Engine einen Arbeitsplatz-Datenabrufdienst (967) bereitstellt, der Abruf eines Arbeitsplatzelements in auf dem Endgerät (165) gehaltenen Arbeitsplatzdaten ermöglicht, wobei das Verfahren umfasst, das Benutzerendgerät (105) für Folgendes zu konfigurieren:
Kommunizieren (1005) mit dem globalen Server über einen Internet-Kommunikationskanal (110), um Konfigurationsdaten (356) abzurufen (1015), um eine Vielzahl von Diensten zu präsentieren, wobei die Vielzahl von Diensten mindestens ein herunterladbares ausführbares Dienstzugriffsprogramm identifiziert, das wirkt, um von einem Benutzerendgerät (105) aus über den Internet-Kommunikationskanal auf die Dienst-Engine zuzugreifen;
Präsentieren (1020) der Vielzahl von Diensten auf einer Anzeige für einen Benutzer;
Empfangen (1025) einer Auswahl eines Dienstes aus der Vielzahl; und
Herunterladen (1030) eines herunterladbaren ausführbaren Dienstzugriffsprogramms, das dem ausgewählten Dienst entspricht, über das Internet in das Benutzerendgerät; und
Ausführen des heruntergeladenen herunterladbaren ausführbaren Programms, um **dadurch** eine Dienstadresse abzurufen, die der Dienst-Engine zur Verwendung durch das Benutzerendgerät beim Zugriff auf einen durch die Dienst-Engine bereitgestellten Arbeitsplatz-Datenabrufdienst (967) entspricht.

11. Verfahren nach Anspruch 10, wobei das Arbeitsplatzelement Kalender-Arbeitsplatzdaten umfasst.

12. Verfahren nach Anspruch 10, umfassend Konfigurieren (1035) des Benutzerendgeräts unter Verwendung des herunterladbaren ausführbaren Dienstzugriffsprogramms, um über das Internet auf einen Dienst zuzugreifen, der durch eine Dienst-Engine bereitgestellt wird, die sich auf einem weiteren Endgerät (167) befindet.

13. Verfahren nach einem der Ansprüche 10 bis Anspruch 12, umfassend Herunterladen des herunterladbaren ausführbaren Dienstzugriffsprogramms von dem globalen Server.

14. Verfahren nach einem der Ansprüche 10 bis Anspruch 13, wobei die Dienst-Engine einen Benutzerauthenfikationsdienst (963) bereitstellt.

15. Verfahren nach einem der Ansprüche 10 bis Anspruch 14, wobei die Vielzahl herunterladbarer ausführbarer Programme eine Teilmenge von verfügbaren herunterladbaren ausführbaren Programmen umfasst, wobei die Teilmenge auf Benutzeridentität basiert.

16. Verfahren nach einem der Ansprüche 10 bis Anspruch 15, wobei das Benutzerendgerät über den globalen Server, der als Proxy für das Benutzerendgerät wirkt (1340), Antworten von der Dienst-Engine empfängt.

17. Verfahren nach einem der Ansprüche 10 bis Anspruch 15, wobei das Benutzerendgerät durch Abrufen (1205) einer Dienstadresse der Dienst-Engine von dem globalen Server auf die Dienst-Engine zugreift.

18. Verfahren nach einem der Ansprüche 10 bis Anspruch 17, wobei das Benutzerendgerät über den Internet-Kommunikationskanal durch Senden von Dienstanforderungen auf die Dienst-Engine zugreift und Antworten auf die Dienstanforderungen empfängt.

## Revendications

1. Terminal d'utilisateur (105) comprenant :
une interface de communication (240) conçue pour communiquer via un canal de communication internet (110) ;
un moteur web (140) configuré pour contacter un serveur global (115) via le canal de communication internet en utilisant l'interface de communication pour récupérer des données de configuration (356), le moteur web étant conçu pour présenter une pluralité de services (615) en utilisant les données de configuration récupérées, la pluralité de services identifiant au moins un exécutable téléchargeable d'accès au service permettant l'accès à un moteur de service (175) à partir du terminal d'utilisateur via le canal de communication internet ;
un afficheur (230) pour présenter la pluralité de services à un utilisateur du terminal d'utilisateur ; et
un dispositif d'entrée (220) permettant à l'utilisateur de sélectionner un service à partir de la pluralité,
dans lequel le moteur web est configuré pour télécharger un exécutable téléchargeable d'accès au service correspondant au service choisi via le canal de communication internet en utilisant l'interface de communication, et pour exécuter l'exécutable téléchargeable téléchargé, ce qui permet de récupérer une adresse de service correspondant au moteur de service qui sera utilisée par le terminal d'utilisateur pour l'accès à un service de récupération de données de l'espace de travail (967) fourni par ledit moteur de service, ledit service de récupération de données de l'espace de travail permettant la récupération d'un élément de l'espace de travail dans les données de l'espace de travail conservées dans un terminal distant du serveur global et correspondant à l'adresse de service récupérée.

2. Terminal d'utilisateur de la revendication 1, dans lequel ledit élément de l'espace de travail comporte des données de calendrier de l'espace de travail.

3. Terminal d'utilisateur de la revendication 1, dans lequel le terminal d'utilisateur est configuré en utilisant l'exécutable téléchargeable d'accès au service pour accéder au service choisi fourni par un autre moteur de service via internet.

4. Terminal d'utilisateur d'une quelconque des revendications précédentes, dans lequel le terminal d'utilisateur est conçu pour télécharger ledit exécutable téléchargeable d'accès au service à partir du serveur global.

5. Terminal d'utilisateur d'une quelconque des revendications précédentes, dans lequel ledit moteur de service fournit un service d'authentification de l'utilisateur (963).

6. Terminal d'utilisateur d'une quelconque des revendications précédentes, dans lequel la pluralité d'exécutables téléchargeables comporte un sous-ensemble d'exécutables téléchargeables disponibles, ledit sous-ensemble étant fondé sur l'identité de l'utilisateur.

7. Terminal d'utilisateur d'une quelconque des revendications précédentes, dans lequel le terminal d'utilisateur est configuré pour recevoir des réponses dudit moteur de service via le serveur global agissant comme un proxy pour le terminal d'utilisateur.

8. Terminal d'utilisateur d'une quelconque des revendications 1 à 6, dans lequel le terminal d'utilisateur est configuré pour accéder audit moteur de service en récupérant une adresse de service du moteur de service à partir du serveur global.

9. Terminal d'utilisateur d'une quelconque des revendications précédentes, dans lequel le terminal d'utilisateur est configuré pour accéder audit moteur de service en envoyant des demandes de service, et en recevant des réponses audites demandes de service, via le canal de communication internet.

10. Procédé pour la fourniture d'accès à des services (615) fournis par un moteur de service (175) à un terminal d'utilisateur (105) via un serveur global (115), ledit moteur de service étant situé dans un terminal (165) distant dudit serveur global, et ledit moteur de service fournissant un service de récupération de données de l'espace de travail (967) permettant la récupération d'un élément de l'espace de travail dans les données de l'espace de travail conservées dans ledit terminal (165), le procédé comprenant de plus la configuration du terminal d'utilisateur (105) pour :
communiquer (1005) avec le serveur global via un canal de communication internet (110) pour récupérer (1015) des données de configuration (365) pour présenter une pluralité de services, la pluralité de services identifiant au moins un exécutable téléchargeable d'accès au service permettant l'accès au moteur de service à partir d'un terminal d'utilisateur (105) via le canal de communication internet ;
présenter (1020) à un utilisateur la pluralité de services sur un afficheur ;
recevoir (1025) un choix de service à partir de la pluralité ; et
télécharger (1030) un exécutable téléchargeable d'accès au service correspondant au service choisi via internet sur le terminal d'utilisateur ; et
exécuter l'exécutable téléchargeable téléchargé, ce qui permet de récupérer une adresse de service correspondant au moteur de service qui sera utilisée par le terminal d'utilisateur pour l'accès à un service de récupération de données de l'espace de travail (967) fourni par ledit moteur de service.

11. Procédé de la revendication 10, dans lequel ledit élément de l'espace de travail comporte des données de calendrier de l'espace de travail.

12. Procédé de la revendication 10, comprenant la configuration (1035) du terminal d'utilisateur en utilisant l'exécutable téléchargeable d'accès au service pour accéder à un service fourni via internet par un moteur de service situé dans un autre terminal (167).

13. Procédé d'une quelconque des revendications 10 à 12, comprenant le téléchargement de l'exécutable téléchargeable d'accès au service à partir du serveur global.

14. Procédé d'une quelconque des revendications 10 à 13, dans lequel ledit moteur de service fournit un service d'authentification de l'utilisateur (963).

15. Procédé d'une quelconque des revendications 10 à 14, dans lequel la pluralité d'exécutables téléchargeables comporte un sous-ensemble d'exécutables téléchargeables disponibles, ledit sous-ensemble étant fondé sur l'identité de l'utilisateur.

16. Procédé d'une quelconque des revendications 10 à 15, dans lequel le terminal d'utilisateur reçoit les réponses dudit moteur de service via le serveur global agissant (1340) comme un proxy pour le terminal d'utilisateur.

17. Procédé d'une quelconque des revendications 10 à 15, dans lequel le terminal d'utilisateur accède audit moteur de service en récupérant (1205) une adresse de service du moteur de service à partir du serveur global.

18. Procédé d'une quelconque des revendications 10 à 17, dans lequel le terminal d'utilisateur accède audit moteur de service en envoyant des demandes de service, et reçoit des réponses audites demandes de service, via le canal de communication internet.
